# EUROPÄISCHE PATENTSCHRIFT

(11) **EP 1 451 484 B1**
(45) Veröffentlichungstag und Bekanntmachung des Hinweises auf die Patenterteilung: **22.02.2006**
(21) Anmeldenummer: 02792826.6
(22) Anmeldetag: 29.11.2002
(51) Int. Cl.: F16G 5/16

(54) **VERFAHREN ZUR ÜBERPRÜFUNG DER FERTIGUNGSQUALITÄT VON SCHUBGLIEDERN IN SCHUBGLIEDERBÄNDERN**
METHOD FOR VERIFYING THE MANUFACTURING QUALITY OF SLIDING ELEMENTS IN BELTS THEREFOR
PROCEDE DE VERIFICATION DE LA QUALITE DE FABRICATION DE BALADEURS DANS DES BANDES DE BALADEURS

(30) Priorität: 04.12.2001 DE 10159568
(43) Veröffentlichungstag der Anmeldung: 01.09.2004
(73) Patentinhaber: ZF Transmission Technologies L.L.C., Batavia, OH 45103 (US)
(72) Erfinder: FICHTINGER, Thomas, 88074 Meckenbeuren (DE); DICK, Albert, 88069 Tettnang (DE); STRAUB, Georg, 78354 Sipplingen (DE)
(74) Vertreter: Zietlow, Karl-Peter
(86) Internationale Anmeldenummer: PCT/EP2002/013464
(87) Internationale Veröffentlichungsnummer: WO 2003/048601

(56) Entgegenhaltungen:
- EP-A- 1 094 242
- US-A- 4 729 758
- PATENT ABSTRACTS OF JAPAN vol. 2002, no. 02, 2. April 2002 (2002-04-02) -& JP 2001 304847 A (HONDA MOTOR CO LTD), 31. Oktober 2001 (2001-10-31)

## Beschreibung

Die vorliegende Erfindung betrifft ein Verfahren zur Überprüfung der Fertigungsqualität von Schubgliedern in Schubgliederbändern eines stufenlosen Umschlingungsgetriebes (CVT) gemäß dem Oberbegriff des Patentanspruchs 1, siehe US-A-4 729 758.

Ein stufenloses Umschlingungsgetriebe besteht üblicherweise u.a. aus einer Anfahreinheit, einer Vorwärts/Rückwärts-fahreinheit, einer Zwischenwelle, einem Differential, aus hydraulischen und elektronischen Steuereinrichtungen sowie aus einem Variator.

Der Variator umfasst nach dem Stand der Technik eine Primär- und eine Sekundärscheibe, auch Primär- und Sekundärseite genannt, wobei beide Scheiben aus paarweise angeordneten Kegelscheiben gebildet sind. Des weiteren ist ein Variator mit einem momentenübertragenden Umschlingungselement versehen, das zwischen den beiden Kegelscheibenpaaren umläuft. In einem derartigen Getriebe wird die aktuelle Übersetzung durch den Laufradius des Umschlingungselementes definiert, der wiederum eine Funktion der axialen Position der Kegelscheiben ist. Die Kegelscheiben werden mit hydraulischem Druck von der Getriebeölpumpe beaufschlagt, zum einen zur Übersetzungsverstellung, zum anderen zur Sicherstellung des zur Drehmomentübertragung notwendigem Anpressdruckes auf das Umschlingungselement.

Ein Umschlingungselement, insbesondere für leistungsstärkere Motoren besteht nach dem Stand der Technik aus einzelnen Schubgliedern, die zur eigentlichen Kraftübertragung dienen und aus sogenannten Ringpaketen. Derartige Schubgliederbänder bestehen aus einer Vielzahl von einzelnen Metallelementen, die zusammengesteckt werden und die auf beiden Seiten der Radialebene des fertigen Schubgliederbandes von je einem elastisch verformbaren Ringpaket gehalten werden.

Für eine lange Lebensdauer eines Schubgliederbandes ist es wichtig, dass die Fertigungstoleranzen der Schubglieder und der Ringe sehr eng und über alle Bauteile gleichmäßig gehalten werden. Insbesondere ist die Höhenverteilung der Schubgliedschultern entscheidend für die Kontaktkräfte der über diese Schultern laufenden Ringe.

Der vorliegenden Erfindung liegt die Aufgabe zugrunde, ein Verfahren zur Überprüfung der Fertigungsqualität von Schubgliedern in Schubgliederbändern anzugeben, das möglichst exakt Abweichungen von den Fertigungstoleranzen erfasst.

Zudem soll ausgehend vom Stand der Technik gemäß Oberbegriff des Anspruchs 5, siehe EP-A-1 094 242, eine Vorrichtung, insbesondere zur Durchführung des Verfahrens nach einem der Ansprüche 1 bis 4, angegeben werden, die diese Aufgabe löst.

Diese Aufgabe wird für ein Verfahren durch die Merkmale des Patentanspruchs 1 gelöst. Die erfindungsgemäße Vorrichtung zur Durchführung des Verfahrens ist Gegenstand des Anspruchs 5. Weitere Ausgestaltungen und Varianten gehen aus den Unteransprüchen hervor.

Demnach wird vorgeschlagen, die Schubglieder mittels einer Messeinrichtung zu vermessen. Insbesondere wird mit einem Messverfahren die Höhenverteilung der Schubgliederschultern ermittelt, wobei vorzugsweise eine 3D-Messeinrichtung eingesetzt wird.

Vorteilhafterweise werden die Schubgliederschultern immer an der gleichen Position der Schulter abgetastet. Um die Durchführung des Verfahrens effektiver zu gestalten, wird die 3D-Messeinrichtung im Schubglieddickenabstand getaktet.

Durch des erfindungsgemäße Verfahren werden die Schubglieder mit den realen Kontaktstellen der Schubgliedflanken im Betrieb eingespannt.

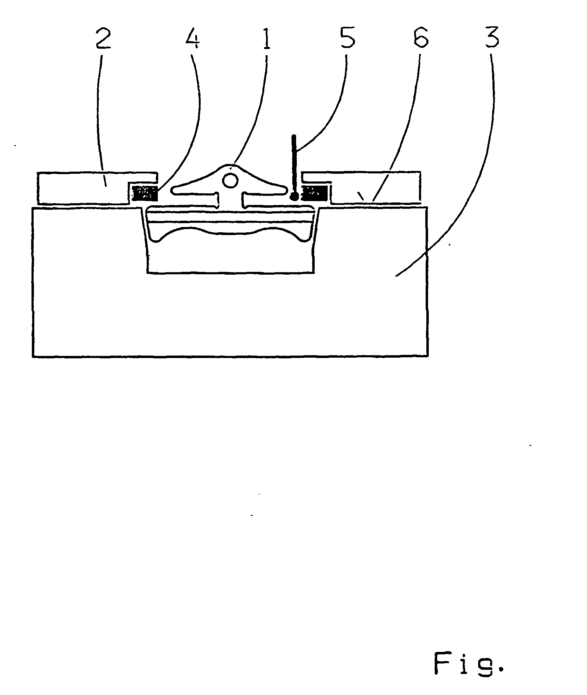

Die Erfindung wird im folgenden anhand der beigefügten Figur näher erläutert, die eine bevorzugten Ausführungsform einer erfindungsgemäßen Vorrichtung zur Durchführung des Messverfahrens zeigt.

Gemäß der Figur wird ein Teil der Schubglieder 1 aus einem Schubgliederband in einem Keil, der den Kegelscheiben des Variators entspricht, axial zwischen zwei Klemmteilen 2 in einem Strang einer Haltevorrichtung 3 eingespannt. Als Klemmteile werden bevorzugterweise Halteschienen 2 verwendet. Dies resultiert darin, dass die Elemente (Schubglieder) 1 des Schubgliederbandes mit realen Kontaktverhältnissen positioniert werden. Hierbei werden die Schubglieder 1 über die Schubgliederflanken oder den Eingriff von Dimple im Hole positioniert.

Gemäß der Erfindung ist vorgesehen, eine mögliche undefinierte Stellung eines Schubgliedes 1, beispielsweise für den Fall eines zu schmalen Schubgliedes, mittels einer gleichmäßigen, elastischen Anpressung durch ein Element mit elastischen Eigenschaften 4, vorzugsweise ein Elastomer auszugleichen.

Nach dem Einspannen der Schubglieder 1 mit Hilfe der Haltevorrichtung 3 werden die Schubgliedschultern mit einer Messeinrichtung, vorteilhafterweise einer 3D-Messeinrichtung mit einem Messtaster 5 abgetastet, wobei - durch eine entsprechende Einstellung der Messeinrichtung - die Schultern immer im gleichen Abstand auf beiden Schultern vermessen werden.

Als Bezugsebene 6 für die Messung dient hierbei die Oberfläche der Haltevorrichtung 3. Als ein Resultat des Messverfahrens steht für jedes Schubglied der Höhenwert der Schulter auf beiden Seiten zur Verfügung, der anschließend weiter ausgewertet werden kann. Gemäß der Erfindung ist zudem vorgesehen, um die Durchführung des Verfahrens effektiver zu gestalten, die Messeinrichtung im Schubglieddickenabstand zu takten.

### Bezugszeichen

- 1: Schubglied
- 2: Klemmteil, Halteschiene
- 3: Haltevorrichtung
- 4: Element mit elastischen Eigenschaften
- 5: Messtaster der Messeinrichtung
- 6: Bezugsebene

## Patentansprüche

1. Verfahren zur Überprüfung der Fertigungsqualität von Schubgliedern in Schubgliederbändern, bei dem die Schubglieder (1) mittels einer Messeinrichtung (5) vermessen werden und die Höhenverteilung der Schubgliederschultern ermittelt wird, wobei ein oder mehrere Schubglieder (1) eines Schubgliederbandes zur Vermessung in einem Keil, der den Kegelscheiben des Variators entspricht, zwischen zwei Klemmteilen (2) in einem Strang einer Haltevorrichtung (3) eingespannt werden, **dadurch gekennzeichnet, dass** eine mögliche undefinierte Stellung eines Schubgliedes (1), mittels einer gleichmäßigen, elastischen Anpressung durch ein Element mit elastischen Eigenschaften (4) ausgeglichen wird.

2. Verfahren nach Anspruch 1, **dadurch gekennzeichnet, dass** eine 3D-Messeinrichtung mit einem Messtaster (5) eingesetzt wird.

3. Verfahren nach Anspruch 1 oder 2, **dadurch gekennzeichnet, dass** die Messeinrichtung (5) im Schubglieddickenabstand getaktet wird.

4. Verfahren nach einem der vorhergehenden Ansprüche , **dadurch gekennzeichnet, dass** als Bezugsebene (6) für die Messung die Oberfläche der Haltevorrichtung (3) verwendet wird.

5. Vorrichtung, insbesondere zur Durchführung des Verfahrens nach einem der vorangehenden Ansprüche, welche eine Haltevorrichtung (3) für Schubglieder (1) umfasst, die derart ausgebildet ist, dass die Schubglieder (1) in einem Keil unter realen Kontaktverhältnissen einspannbar sind, wobei Klemmteile (2) vorgesehen sind, um die Schubglieder (1) axial zu halten. **dadurch gekennzeichnet, dass** die Klemmteile (2) als Halteschienen ausgebildet sind wobei an den Klemmteilen (2) Elemente mit elastischen Eigenschaften (4) vorgesehen sind.

6. Vorrichtung nach Anspruch 5, **dadurch gekennzeichnet, dass** die Elemente mit elastischen Eigenschaften (4) Elastomere sind.

## Claims

1. A method for verifying the manufacturing quality of thrust-belt blocks of thrust belts, which involves measurement of the thrust-belt blocks (1) and determination of the distribution of the height of the shoulders of the thrust-belt blocks by means of a measuring device (5), with one or several thrust-belt blocks (1) of a thrust belt being clamped in a wedge, which corresponds to the conical disks of the variator, between two clamping pieces (2) in a string of a retaining device (3), **characterized in that** a potential undefined position of a trust-belt block (1) is offset via a steady, elastic down pressure exerted by an element featuring elastic properties (4).

2. A method according to claim 1, **characterized in that** a three-dimensional measuring device featuring a caliper (5) is employed.

3. A method according to claim 1 or 2, **characterized in that** phasing of the measuring device (5) tallies with the thickness distance of the thrust-belt blocks.

4. A method according to one of the preceding claims, **characterized in that** the surface of the retaining device (3) is used as a reference plane (6) for measurement.

5. A device, especially for implementing the method according to one of the preceding claims, which comprises a retaining device (3) for thrust-belt blocks (1), which is designed in such a way that under actual contact conditions the thrust-belt blocks (1) can be clamped in a wedge, with clamping pieces (2) being provided for axial retention of the thrust-belt blocks (1), **characterized in that** the clamping pieces (2) are designed as retaining rails, with elements featuring elastic properties (4) being provided on the clamping pieces (2).

6. A device according to claim 5, **characterized in that** the elements featuring elastic properties (4) are elastomer elements.

## Revendications

1. Méthode de contrôle de la qualité de fabrication des maillons de courroies à maillons selon laquelle les maillons (1) sont mesurés à l'aide d'un dispositif de mesure (5) et la distribution en hauteur des épaulements des maillons est déterminée, sachant que un ou plusieurs maillons (1) d'une courroie à maillons sont serrés, pour la mesure dans une clavette correspondante aux disques coniques du variateur, entre deux éléments de serrage (2) dans une ligne du dispositif de maintien (3), **caractérisée en ce que** une position possible et pas définie d'un maillon (1) est compensée par une pression uniforme et élastique à l'aide d'un élément ayant des caractéristiques élastiques (4).

2. Méthode selon la revendication 1, **caractérisée en ce que** sont utilisés un équipement de mesure 3D et un palpeur (5).

3. Méthode selon la revendication 1 ou 2, **caractérisée en ce que** l'équipement de mesure (5) est cadencé en fonction de la distance d'épaisseur des maillons.

4. Méthode selon une des revendications précédentes, **caractérisée en ce que** la surface du dispositif de maintien (3) est utilisée en tant que plan de référence (6) pour la mesure.

5. Équipement, en particulier pour la mise en place de la méthode selon une des revendications précédentes, comprenant un dispositif de maintien (3) des maillons (1) réalisé de manière à ce que les maillons peuvent être serrés dans une clavette dans des conditions de contact réelles, sachant que sont prévus des éléments de serrage (2) pour maintenir les maillons (1) dans une position axiale, **caractérisé en ce que** les éléments de serrage (2) sont réalisés en tant que rails de maintien, sachant que sur les éléments de fixation (2) sont prévus des éléments ayant des caractéristiques élastiques (4).

6. Équipement selon la revendication 5, **caractérisé en ce que** les éléments ayant des caractéristiques élastiques (4) sont des élastomères.
